# EUROPEAN PATENT SPECIFICATION

(11) **EP 2 030 865 B1**
(45) Date of publication and mention of the grant of the patent: **01.10.2014**
(21) Application number: 08163312.5
(22) Date of filing: 29.08.2008
(51) Int. Cl.: B62B 9/14

(54) **Pram comprising a detachable cover**
Kinderwagen mit abnehmbarer Abdeckung
Landau avec protection amovible

(30) Priority: 31.08.2007 DK 200701241
(43) Date of publication of application: 04.03.2009
(73) Proprietor: Odder Barnevognsfabrik A/S, 8300 Odder (DK)
(72) Inventor: Nielsen, Heidi, DK-9280, Storvorde (DK); Tollestrup, Anne Hvid, DK-9320, Hjallerup (DK)
(74) Representative: Nielsen, Charlotte

(56) References cited:
- WO-A1-03/066411
- DE-A1- 19 952 809
- US-A- 1 732 878
- US-A1- 2006 181 121

## Description

### FIELD OF THE INVENTION

The present invention relates to a detachable cover for a pram. In particular, the present invention relates to a detachable cover comprising opening means for establishing an opening in the detachable cover, said opening allowing a baby to be removed from the pram without detaching the detachable cover from the pram.

### BACKGROUND OF THE INVENTION

In traditional prams or strollers a woven cover is provided to protect a baby or a small child positioned in the pram or stroller. Typically this cover is attached to a top portion of the pram or stroller using press buttons or an elastic band or a combination thereof. When the cover is attached to the pram or stroller it becomes very difficult, if not impossible, to remove a baby or a small child positioned in the pram or stroller. Thus, in case a baby or a small child is to be removed from the pram or stroller the cover needs to be detached from the top portion of the pram or stroller. This typically leads to a situation where a mother or a father carries the cover to the pram or stroller in one hand and the baby/small child in the other hand. However, this situation should be avoided because the person carrying the baby/small child in only one hand may accidentally drop the baby/small child.

US 1,732,878 relates to a protecting net suitable for being associated with a pram in order to keep pestiferous insects, bugs, flies and mosquitoes away from a baby lying in the pram. The protecting net comprises an opening through which the baby can be taken up. WO 03/066411 also relates to a baby carriage cover used for protecting a baby from external factors including wind and rain, snow, and exhaust gases. The baby carriage cover is constructed such that by opening/closing the opening in the cover, it allows the guardian to put one's hand into the cover and to help the baby to get on and off the pram. US 2006/181 121 relates to a cover for a pram including thermally insulated panels for retaining warmth for use in cold weather. The front panel includes an umbrella-shaped window with zipper access to allow the baby to be removed from or replaced into the pram.

Where the covers/nets described in US 1,732,878, WO 03/066411, and US 2006/181 121 all have an opening allowing the baby to be removed from or replaced into the pram neither of them form an integral part of the pram when mounted thereon. Moreover, the protecting nets do not prevent babies positioned in the pram from falling out of the pram, they only protects against pestiferous insects, bugs, flies and mosquitoes, and/or external factors including wind and rain, snow, and exhaust gases - the latter by possibly including thermally insulating means.

It may be seen as an object of the present invention to provide a detachable cover for prams which allows safe removal of a baby from a pram without detaching the cover from the pram.

### SUMMARY OF THE INVENTION

The above-mentioned object is complied with by providing a pram according to claim 1.

By pram is meant a baby carriage for transporting primarily babies in a lying position. By stroller is meant a child carriage for transporting small children primarily in a sitting position. By detachable is meant that the cover may be detached from the top portion of the pram or stroller. Such detachment could be relevant in case the cover becomes dirty and needs to be washed or cleaned in a washing machine.

Preferably, the detachable cover forms an integral part of the detachable top portion of the pram when fastened thereto. Moreover, the detachable cover prevents, when fastened to a pram and being in a closed state, that a baby positioned in the pram accidentally falls out of the pram. Thus, the detachable cover is preferably made of a material or materials having a stiffness being sufficient to retain the baby in the pram.

The fixation means may comprise one or more press buttons which are adapted to engage with appropriate counter parts arranged on the detachable top portion of the pram. The fixation means may alternatively or in combination therewith comprise one or more elastic members, such as a rubber band. As explained later the rubber band may encircle a lower part of the top portion of the pram. In this way the rubber band keeps the detachable cover in a correct position relative to the top portion of the pram.

Preferably, the detachable cover is primarily made of a textile material. In order to protect the baby positioned in the pram the chosen textile material must be water- and wind resistant. A variety of woven materials would be suitable materials.

The opening means provided in the detachable cover may comprise one or more zippers. When the one or more zippers are closed a baby may be kept safely in the pram. In addition, the one or more zippers will, when closed, protect a baby in the pram from rain or other external disturbances. Thus, when fully closed the one or more zippers provide full protection of the baby in the pram.

When the one or more zippers are in a fully open position an opening is provided in the detachable cover. This provided opening in the detachable cover is sufficient to allow a baby to be removed from the pram without the usual need for detaching the cover from the pram. Thus, the opening provided in the detachable cover eases the access to and from the pram.

Preferably, the one or more zippers are water proof zippers.

In one embodiment of the present invention the opening means comprises a single zipper symmetrically arranged in the detachable cover. By symmetrically arranged is meant that the zipper, preferably a water proof zipper, is position along a longitudinal symmetry axis of the detachable cover. The longitudinal symmetry axis of the cover becomes substantially parallel to a longitudinal axis of the top portion of the pram when said detachable cover is mounted on the pram.

In combination with one or more water proof zippers the opening means may comprise one or more press buttons. In addition, the opening means may comprise one or more strips of releasable fasteners, such as strips of releasable tape. In embodiments where the opening means comprises strips of releasable tape counter parts of the releasable tape may be positioned on opposing sides of the opening.

Independent of the type of opening means the shape of the opening in the detachable cover may in principle take any form. Thus, the opening may be a simple linear opening having two linear edges, or it may take the form of a more complicated shape.

In terms of implementation the opening means may be implemented following the design routes given in connection with the present invention. Similarly, the shape of the opening in the cover may in principle take any form. Thus, the opening may be a simple linear opening or an opening having a more complicated shape.

### BRIEF DESCRIPTION OF THE DRAWINGS

The present invention will now be described in further details with references to the accompanying figures where
Fig. 1 shows a closed detachable cover mounted on a top portion of a pram,
Fig. 2 shows an open detachable cover mounted on a top portion of a pram, and
Fig. 3 shows a detachable cover having a centrally positioned water proof zipper.

### DETAILED DESCRIPTION OF THE INVENTION

The present invention relates to a pram with a detachable cover adapted to form part of a detachable top portion of a pram. The top portion of the pram is typically arranged on a lower portion, said lower portion including an appropriate number of wheels, such as four wheels. The detachable cover comprises fixation means for fastening the detachable cover to top portion of the pram. The detachable cover further comprises appropriate and user operable opening means for establishing an opening or passage in the detachable cover, said opening or passage allowing, optionally in combination with an opening or passage in the top portion of the pram, removal of a baby from the pram when the detachable cover is fastened to the detachable top portion of the pram. Thus, it is an advantage of the present invention that a baby can be removed from the pram without first being forced to detach the cover from the top portion of the pram. The cover according to the present invention thus eases access to a baby positioned in the pram.

The present invention will now be described in further details with references to a pram.

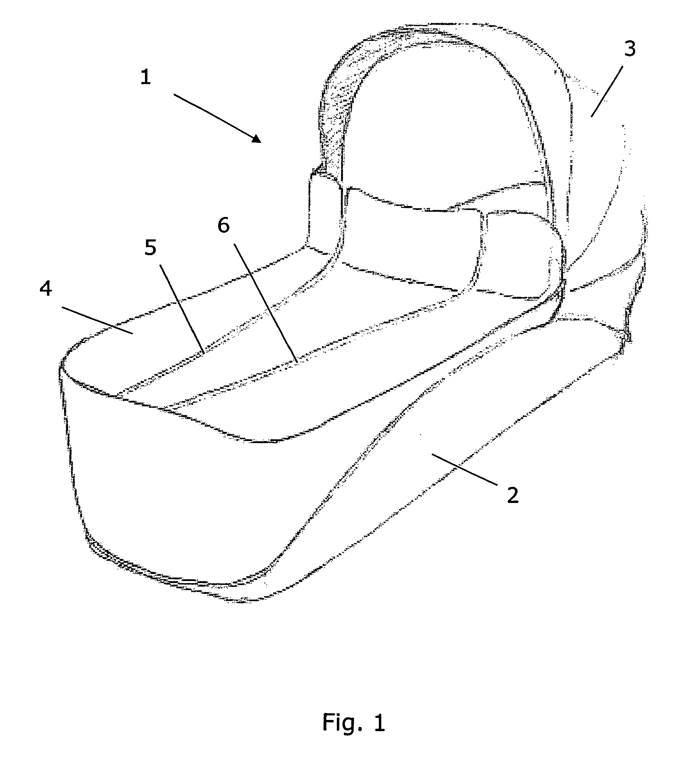

Referring now to Fig. 1 a top portion 1 of a pram is depicted. As depicted in Fig. 1 the top portion comprises a bottom part 2 and a head part 3 and a detachable cover 4 attached to the bottom and/or head part. The head part 3 is typically arranged to be folded down so that the overall size of the top portion can be reduced. This is of particular importance in case the pram is to be transported for example by car.

The detachable cover 4 may be attached to the top portion 1 by various means such as for example by using press buttons in combination with an elastic member.

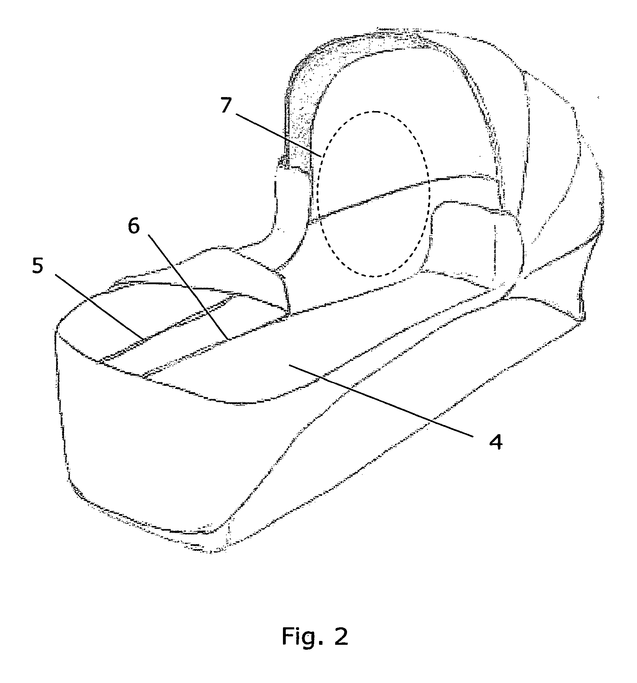

As depicted in Fig. 1 a pair of water proof zippers 5, 6 are integrated with the detachable cover 4. These zippers facilitates, in their open positions, that a baby lying or sitting in the top portion 1 of the pram may be removed from said top portion without removing the detachable cover first. This is depicted in Fig. 2 where the two zippers 5, 6 have been approximately half opened whereby an opening 7 (dashed ellipse) is provided. The dimensions of this opening are sufficient for removing a baby from the pram without first removing the detachable cover 4.

In Fig. 1 and 2 a pair of water proof zippers are provided for establishing the opening in the detachable cover. Obviously, the number of zippers may differ from two. Thus, a centrally positioned water proof zipper may also provide the required opening in the detachable cover. Even further, press buttons, Velcro tape and similar arrangements are also applicable for provided the required opening in the detachable cover. Even a combination of one or more zippers, one or more press buttons and Velcro tape may equally well be applicable.

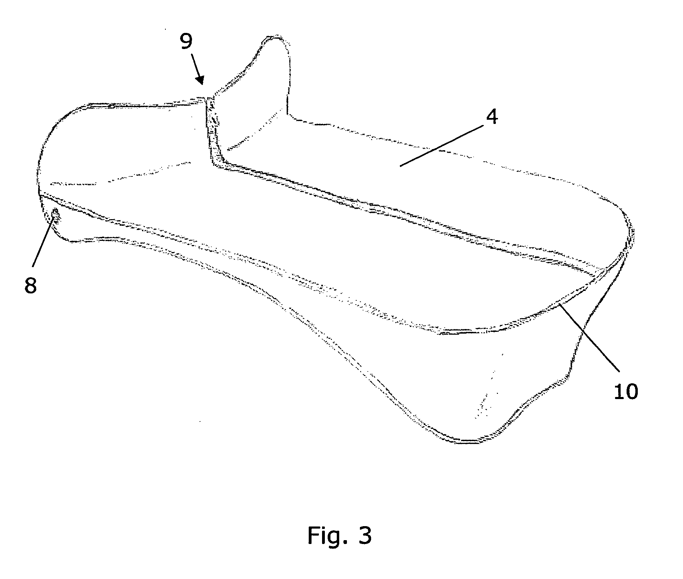

Fig. 3 shows a detachable cover 4 to a pram (not shown). The detachable cover 4 is shaped to fit the shape of an associated top portion of a pram (not shown). Thus, the shape of the detachable cover 4 may differ from the shape depicted in Fig. 3 in case the detachable cover 4 has to match a top portion of a pram having a different shape.

The detachable cover 4 shown in Fig. 3 comprises a centrally positioned water proof zipper 9 which extends over the entire length of a top part of the detachable cover 4. The detachable cover 4 is adapted to be attached to a top portion of a pram (not shown) using two press buttons 8 (only one is shown) and an integrated elastic member positioned along the cover edge 10. The integrated elastic member is not visible in Fig. 3 because it is sewn into the woven material forming the detachable cover 4. It should be noted that the elastic member is optional. Instead, a desired elasticity of the detachable cover which is typically required in order to keep the detachable cover 4 in its correct position on the top portion of the pram can be integrated or included in the woven material of which the detachable cover 4 is preferably made.

The press buttons 8 may be replaced by other fixation means, such as for example Velcro tape.

The zipper 9 may be visible from the outside of the detachable cover or it may be hidden behind a lid which has to be moved or swung aside prior to opening or closing the zipper.

The detachable cover can be manufactured of a variety of materials. Preferably, the detachable cover according to the present invention is manufactured of a woven material which has to be resistant to wind and water in order to protect a baby properly.

## Claims

1. A pram comprising a detachable cover (4) shaped and dimensioned to fit the shape of an opening of the bottom part (2) opposite the head part of an associated detachable top portion (1) of the pram such that said detachable cover (4) fits over said opening of said bottom part (2) opposite said head part (3) and further partially covers the opening of the head part (3), said detachable cover (4) comprises fixation means (8) for fastening said detachable cover (4) to said detachable top portion (1) **characterized in that** said detachable cover (4) further comprises opening means (5, 6) for establishing an opening (7) in said detachable cover (4), said opening (7) allowing removal of a baby from said pram when said detachable cover (4) is fastened to said detachable top portion (1) of said pram, wherein opening means (5, 6) comprises a single zipper centrally positioned along the longitudinal symmetry axis of the detachable cover (4) or a pair of water proof zippers.

2. A pram according to claim 1, wherein said fixation means (8) comprises one or more press buttons.

3. A pram according to claim 1 or 2, wherein said fixation means (8) comprises one or more elastic members, such as a rubber band.

4. A pram according to any of claims 1-3, wherein said detachable cover (4) is primarily made of a textile material.

## Patentansprüche

1. Ein Kinderwagen mit einer abnehmbaren Abdeckung (4), passgenau für eine Öffnung am unteren Teil (2) gegenüber des Kopfteils eines dazugehörigen und abnehmbaren oberen Teils (1) des Kinderwagens, so geformt und dimensioniert, dass die abnehmbare Abdeckung (4) auf die Öffnung des unteren Teils (2) gegenüber des Kopfteils (3) passt und ferner die Öffnung des Kopfteils (3) teilweise abdeckt, wobei die abnehmbare Abdeckung (4) über Befestigungsmittel (8) zur Anbringung der abnehmbaren Abdeckung (4) an dem abnehmbaren oberen Teil (1) verfügt,
**dadurch gekennzeichnet, dass** die abnehmbare Abdeckung (4) außerdem über Öffnungsmittel (5, 6) zur Einrichtung einer Öffnung (7) in der abnehmbaren Abdeckung (4) verfügt, sodass die Öffnung (7) das Herausnehmen eines Babys aus dem Kinderwagen ermöglicht, wenn die abnehmbare Abdeckung (4) an dem abnehmbaren oberen Teil (1) des Kinderwagens befestigt wird, wobei die Öffnungsmittel (5, 6) aus einem einzelnen Reißverschluss, der zentral entlang der längs verlaufenden Symmetrieachse der abnehmbaren Abdeckung (4) positioniert ist, oder einem Paar wasserdichter Reißverschlüsse bestehen.

2. Ein Kinderwagen nach Anspruch 1, wobei die Befestigungsmittel (8) aus einem oder mehreren Druckknöpfen bestehen.

3. Ein Kinderwagen nach Anspruch 1 oder 2, wobei die Befestigungsmittel (8) aus einem oder mehreren elastischen Gliedern, wie einem Gummiband, bestehen.

4. Ein Kinderwagen nach einem der Ansprüche 1-3, wobei die abnehmbare Abdeckung (4) primär aus einem textilen Material besteht.

## Revendications

1. Landau comprenant une couverture détachable (4) laquelle est façonnée et dimensionnée pour s'adapter à la forme d'une ouverture de la partie inférieure (2), opposée à la partie tête d'une portion supérieure détachable associée (1) du landau, de sorte que ladite couverture détachable (4) s'adapte au-dessus de ladite ouverture de ladite partie inférieure (2) opposée à ladite partie tête (3), et en outre couvre partiellement l'ouverture de la partie tête (3), ladite couverture détachable (4) comprenant des moyens de fixation (8) pour assujettir ladite couverture détachable (4) surladite portion supérieure détachable (1), **caractérisé en ce que** ladite couverture détachable(4) comprend en outre des moyens d'ouverture (5, 6) pour établir une ouverture (7) dans ladite couverture détachable (4), ladite ouverture (7) permettant de sortir un bébé dudit landau lorsque ladite couverture détachable (4) est assujettie à ladite portion supérieure détachable (1) duditlandau, cas dans lequel les moyens d'ouverture (5, 6) comportent une fermeture à glissière positionnée centralement le long de l'axe de symétrie longitudinal de la couverture détachable (4) ou une paire de fermetures à glissière imperméables à l'eau.

2. Landau selon la revendication 1, lesdits moyens de fixation (8) comportant un ou plusieurs boutons-pression.

3. Landau selon la revendication 1 ou 2, lesdits moyens de fixation (8) comportant un ou plusieurs éléments élastiques, par exemple une bande en caoutchouc.

4. Landau selon l'une quelconque des revendications 1 à 3, ladite couverture détachable (4) étant principalement fabriquée en une matière textile.
